# EUROPEAN PATENT SPECIFICATION

(11) **EP 2 632 576 B1**
(45) Date of publication and mention of the grant of the patent: **08.10.2014**
(21) Application number: 12702685.4
(22) Date of filing: 20.01.2012
(51) Int. Cl.: B01D 69/12, B01D 71/56, B01D 67/00

(54) **METHOD FOR MAKING A COMPOSITE POLYAMIDE MEMBRANE**
HERSTELLUNGSVERFAHREN FÜR POLYAMIDKOMPOSITMEMBRAN
PROCÉDÉ DE FABRICATION POUR MEMBRANE COMPOSITE EN POLYAMIDE

(30) Priority: 24.01.2011 US 201161435494 P
(43) Date of publication of application: 04.09.2013
(73) Proprietor: Dow Global Technologies LLC, Midland, MI 48674 (US)
(72) Inventor: PAUL, Mou, Edina MN 55439 (US); JONS, Steven D., Eden Prairie MN 55346 (US); KOOB, Joseph D., Jordan MN 55352 (US); QIU, XiaoHua Sam, Midland MI 48642 (US); ROSENBERG, Steven, Shorewood MN 55331 (US); ROY, Abhishek, Edina MN 55439 (US)
(74) Representative: Buckley, Guy Julian
(86) International application number: PCT/US2012/021950
(87) International publication number: WO 2012/102943

(56) References cited:
- US-A- 4 259 183
- US-A- 4 606 943
- US-B1- 6 406 626
- US-B1- 6 521 130

## Description

### FIELD:

The present invention is generally directed toward methods for making composite polyamide membranes.

### INTRODUCTION:

Composite polyamide membranes are used in a variety of fluid separations. One common class of membranes includes a porous support coated with a "thin film" polyamide layer. The thin film layer may be formed by an interfacial polycondensation reaction between polyfunctional amine (e.g. m-phenylenediamine) and poly-functional acyl halide (e.g. trimesoyl chloride) monomers which are sequentially coated upon the support from immiscible solutions, see for example US 4277344 to Cadotte. Various constituents may be added to one or both of the coating solutions to improve membrane performance. For example, US 4259183 to Cadotte describes the use of combinations of bi- and tri-functional acyl halide monomers, e.g. isophthaloyl chloride or terephthaloyl chloride with trimesoyl chloride. US 6878278 to Mickols describes the addition of a wide range of complexing agents to the acyl halide coating solution, including various phosphorous containing species. US 2011/0049055 describes the addition of moieties derived from sulfonyl, sulfinyl, sulfenyl, sulfuryl, phosphoryl, phosphonyl, phosphinyl, thiophosphoryl, thiophosphonyl and carbonyl halides. US 6521130 describes the addition of a carboxylic acid (e.g. aliphatic and aromatic carboxylic acids) or carboxylic acid ester to one or both monomer coating solutions prior to polymerization. Similarly, US 6024873, US 5989426, US 5843351 and US 5576057 describes the addition of selected alcohols, ethers, ketones, esters, halogenated hydrocarbons, nitrogen-containing compounds and sulfur-containing compounds having solubility parameters of 8 to 14 (cal/cm³)^{1/2} to one of the coating solutions. US 2009/0107922 describes the addition of various "chain capping reagents" to one or both coating solutions, e.g. 1,3 propane sultone, benzoyl chloride, 1,2-bis(bromoacetoxy) ethane, etc. US 4606943 and US 6406626 describe the formation of a thin film polyamide using a polyfunctional amine and polyfunctional acyl halide along with a polyfunctional acid anhydride halide (e.g. trimelletic anhydride acyl chloride). US 2009/0272692, US 2010/0062156, US 2011/0005997, WO 2009/129354, WO 2010/120326 and WO 2010/120327 describe the use of various polyfunctional acyl halides and their corresponding partially hydrolyzed counterparts. US 4812270 to Cadotte describes post-treating the membrane with phosphoric acid. US 5582725 describes a similar post treatment with an acyl halide such as benzoyl chloride.

### SUMMARY:

The present invention is as set out in the accompanying claims.

The invention includes a method for making a composite polyamide membrane comprising the steps of applying polyfunctional amine and acyl halide monomers to a surface of a porous support and interfacially polymerizing the monomers to form a thin film polyamide layer. The method further includes at least one of the following steps: i) conducting the interfacial polymerization in the presence of an additional monomer dissimilar from the aforementioned polyfunctional amine and acid halide monomers and comprising an aromatic moiety substituted with single carboxylic acid functional group or salt thereof and a single amine-reactive functional group, and wherein the additional monomer and the polyfunctional acid halide monomer are applied from a common non-polar solution in a molar ratio of from 0.001:1 to 1:1; and/or ii) applying such an additional monomer to the thin film polyamide layer, wherein the additional monomer is applied from a non-polar solution at a concentration from 0.5 to 5% weight/volume, wherein the amine-reactive functional group is selected from: acyl halide, anhydride, isocyanate and epoxy. The invention includes many additional embodiments.

### DETAILED DESCRIPTION:

The invention is not particularly limited to a specific type, construction or shape of composite membrane or application. For example, the present invention is applicable to flat sheet, tubular and hollow fiber polyamide membranes useful in a variety of applications including forward osmosis (FO), reverse osmosis (RO), nano filtration (NF), ultra filtration (UF) and micro filtration (MF) fluid separations. However, the invention is particularly useful for membranes designed for RO and NF separations. RO composite membranes are relatively impermeable to virtually all dissolved salts and typically reject more than about 95% of salts having monovalent ions such as sodium chloride. RO composite membranes also typically reject more than about 95% of inorganic molecules as well as organic molecules with molecular weights greater than approximately 100 Daltons. NF composite membranes are more permeable than RO composite membranes and typically reject less than about 95% of salts having monovalent ions while rejecting more than about 50% (and often more than 90%) of salts having divalent ions - depending upon the species of divalent ion. NF composite membranes also typically reject particles in the nanometer range as well as organic molecules having molecular weights greater than approximately 200 to 500 Daltons.

Examples of composite polyamide membranes include FilmTec Corporation FT-30™ type membranes, i.e. a flat sheet composite membrane comprising a bottom layer (back side) of a nonwoven backing web (e.g. PET scrim), a middle layer of a porous support having a typical thickness of about 25-125 µm and top layer (front side) comprising a thin film polyamide layer having a thickness typically less than about 1 micron, e.g. from 0.01 micron to 1 micron but more commonly from about 0.01 to 0.1 µm. The porous support is typically a polymeric material having pore sizes which are of sufficient size to permit essentially unrestricted passage of permeate but not large enough so as to interfere with the bridging over of a thin film polyamide layer formed thereon. For example, the pore size of the support preferably ranges from about 0.001 to 0.5 µm. Non-limiting examples of porous supports include those made of: polysulfone, polyether sulfone, polyimide, polyamide, polyetherimide, polyacrylonitrile, poly(methyl methacrylate), polyethylene, polypropylene, and various halogenated polymers such as polyvinylidene fluoride. For RO and NF applications, the porous support provides strength but offers little resistance to fluid flow due to its relatively high porosity.

Due to its relative thinness, the polyamide layer is often described in terms of its coating coverage or loading upon the porous support, e.g. from about 2 to 5000 mg of polyamide per square meter surface area of porous support and more preferably from about 50 to 500 mg/m². The polyamide layer is preferably prepared by an interfacial polycondensation reaction between a polyfunctional amine monomer and a polyfunctional acyl halide monomer upon the surface of the porous support as described in US 4277344 and US 6878278. More specifically, the polyamide membrane layer may be prepared by interfacially polymerizing a polyfunctional amine monomer with a polyfunctional acyl halide monomer, (wherein each term is intended to refer both to the use of a single species or multiple species), on at least one surface of a porous support. As used herein, the term "polyamide" refers to a polymer in which amide linkages (-C(O)NH-) occur along the molecular chain. The polyfunctional amine and polyfunctional acyl halide monomers are most commonly applied to the porous support by way of a coating step from solution, wherein the polyfunctional amine monomer is typically coated from an aqueous-based or polar solution and the polyfunctional acyl halide from an organic-based or non-polar solution. Although the coating steps need not follow a specific order, the polyfunctional amine monomer is preferably first coated on the porous support followed by the polyfunctional acyl halide. Coating can be accomplished by spraying, film coating, rolling, or through the use of a dip tank among other coating techniques. Excess solution may be removed from the support by air knife, dryers, ovens and the like.

The polyfunctional amine monomer comprises at least two primary or secondary amino groups and may be aromatic (e.g., m-phenylenediamine, p-phenylenediamine, 1,3,5-triaminobenzene, 1,3,4-triaminobenzene, 3,5-diaminobenzoic acid, 2,4-diaminotoluene, 2,4-diaminoanisole, and xylylenediamine) or aliphatic (e.g., ethylenediamine, propylenediamine, and tris (2-diaminoethyl) amine). Examples of preferred polyfunctional amine monomers include primary amines having two or three amino groups, for example, m-phenylene diamine, and secondary aliphatic amines having two amino groups such as piperazine. One preferred polyfunctional amine is m-phenylene diamine (mPD). The polyfunctional amine monomer may be applied to the porous support as a polar solution. The polar solution may contain from about 0.1 to about 20 weight percent and more preferably from about 0.5 to about 6 weight percent polyfunctional amine monomer. Once coated on the porous support, excess solution may be optionally removed.

The polyfunctional acyl halide monomer comprises at least two acyl halide groups and is preferably coated from an organic-based or non-polar solvent although the polyfunctional acyl halide may be delivered from a vapor phase (e.g., for polyfunctional acyl halides having sufficient vapor pressure). The polyfunctional acyl halide is not particularly limited and aromatic or alicyclic polyfunctional acyl halides can be used along with combinations thereof. Non-limiting examples of aromatic polyfunctional acyl halides include: trimesic acyl chloride, terephthalic acyl chloride, isophthalic acyl chloride, biphenyl dicarboxylic acyl chloride, and naphthalene dicarboxylic acid dichloride. Non-limiting examples of alicyclic polyfunctional acyl halides include: cyclopropane tri carboxylic acyl chloride, cyclobutane tetra carboxylic acyl chloride, cyclopentane tri carboxylic acyl chloride, cyclopentane tetra carboxylic acyl chloride, cyclohexane tri carboxylic acyl chloride, tetrahydrofuran tetra carboxylic acyl chloride, cyclopentane dicarboxylic acyl chloride, cyclobutane dicarboxylic acyl chloride, cyclohexane dicarboxylic acyl chloride, and tetrahydrofuran dicarboxylic acyl chloride. One preferred polyfunctional acyl halide is trimesoyl chloride (TMC). The polyfunctional acyl halide may be dissolved in a non-polar solvent in a range from about 0.01 to 10 weight percent, preferably 0.05 to 3 weight percent and may be delivered as part of a continuous coating operation. Suitable solvents are those which are capable of dissolving the polyfunctional acyl halide and which are immiscible with water, e.g. hexane, cyclohexane, heptane and halogenated hydrocarbons such as the FREON series. Preferred solvents include those which pose little threat to the ozone layer and which are sufficiently safe in terms of flashpoints and flammability to undergo routine processing without taking special precautions. A preferred solvent is ISOPAR™ available from Exxon Chemical Company.

The non-polar solution may include additional materials including co-solvents, phase transfer agents, solubilizing agents and complexing agents wherein individual additives may serve multiple functions. Representative co-solvents include: benzene, toluene, xylene, mesitylene, ethyl benzene-diethylene glycol dimethyl ether, cyclohexanone, ethyl acetate, butyl carbitol™ acetate, methyl laurate and acetone. US 6878278, US 6723241, US 6562266 and US 6337018 describe the addition of a broad range of representative complexing agents that may combined with the non-polar solution prior to conducting the interfacial polymerization. A class of such complexing agents is represented by Formula (I).

Formula (I): *α*(*L*ₓβ)_{y}

where α is a non-sulfur containing binding core selected from elements falling within: (a) Group IIIA-VIB (i.e., Groups IIIA, IVA, VA, VIA, VIIA, VIIIA, IB, IIB, IIIB, IVB, VB, VIB) and (b) Periods 3-6 (i.e., Periods starting with Na, K, Rb, and Cs) of the conventional IUPAC periodic table. Groups IIIA through VIB of the conventional IUPAC form of the Periodic Table corresponds to: Groups 3-16 of the "new notation" IUPAC Periodic Table and Groups IIIB-VIA of the CAS version of the Periodic Table. In order to avoid any confusion further reference herein will utilize the conventional IUPAC Periodic Table, i.e., Group IIIA corresponds to the column starting with Sc, Y, La, etc, and Group VIB corresponds to the column starting with O, S, Se, Te, Po. Specific examples include: (1) the following metals: aluminum, scandium, titanium, vanadium, chromium, manganese, iron, cobalt, nickel, copper, zinc, gallium, germanium, arsenic, yttrium, zirconium, niobium, molybdenum, technetium, ruthenium, rhodium, palladium, silver, cadmium, indium, tin, antimony, tellurium, lanthanum, cerium, praseodymium, neodymium, promethium, samarium, europium, gadolinium, terbium, dysprosium, holmium, erbium, thulium, ytterbium, lutetium, hafnium, tantalum, tungsten, rhenium, osmium, iridium, platinum, gold, mercury, thallium, lead, bismuth (bismuth is not typically preferred), and polonium; (2) the following semi-conductors: silicon, selenium, and germanium and (3) phosphorous. Particularly preferred binding cores include: Al, Si, P, As, Sb, Se and Te and metals such as: Fe, Cr, Co, Ni, Cu, and Zn. L is an optional chemical linking group, the same or different, selected from linkages such as: carbon containing moieties, e.g., aromatic groups, alkanes, alkenes,--O--,--S--,--N--,--H--,--P--,--O--P--, and--O--P--O--, (each of which may be substituted or unsubstituted). β is solubilizing group, the same or different, and includes from 1 to 12 carbon atoms which may be substituted or unsubstituted and which may include internal linking groups as defined by L. Examples include aliphatic and arene groups having 1 to 6 carbon atoms, aromatic groups, heterocyclic groups, and alkyl groups. "x" is an integer from 0 to 1 and "y" is an integer from 1 to 5, preferably from 2 to 4. Although dependent upon the specific solvent(s) and acyl halide species utilized, the following complexing agents are generally useful in the subject invention: tri-phenyl derivatives of phosphorous (e.g., phosphine, phosphate), bismuth, arsenic and antimony; alkane oxy esters of phosphorous including tributyl and dibutyl phosphite; organo-metallic complexes such as ferrocene and tetraethyl lead and acetylacetonate complexes of iron (II), iron (III), cobalt (III) and Cr (III). A preferred class of such complexing agents is represented by Formula (II). 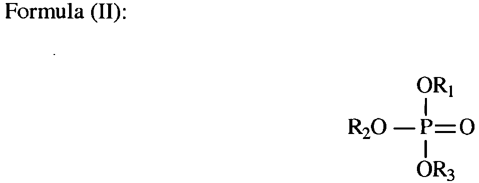 wherein "P" is phosphorous, "O" is oxygen and R₁, R₂ and R₃ are independently selected from carbon containing moieties. The term "carbon containing moiety" is intended to mean branched and unbranched acyclic groups, e.g., methyl, ethyl, propyl, isopropyl, butyl, isobutyl, pentyl, 2-pentyl, 3-pentyl, tert-butyl, etc., which may be unsubstituted or substituted (e.g., substituted with amide groups, ether groups, ester groups, sulfone groups, carbonyl groups, anhydrides, cyanide, nitrile, isocyanate, urethane, beta-hydroxy ester, double and triple bonds etc.), and cyclic groups, e.g., cyclo pentyl, cyclo hexyl, aromatics, e.g., phenyl, heterocyclic (e.g., pyridine), etc., which may be unsubstituted or substituted, (e.g., substituted with methyl, ethyl, propyl, hydroxyl, amide, ether, sulfone, carbonyl, ester, etc.). Cyclo moieties may be linked to the phosphorous atom by way of an aliphatic linking group, e.g., methyl, ethyl, etc. Preferred carbon containing moieties include unsubstituted, branched or unbranched C₁-C₁₂ groups, and more preferably C₁-C₈ aliphatic groups such as: methyl, ethyl, propyl, isopropyl, butyl, 2-methyl butyl, 3-methyl butyl, 2-ethyl butyl, pentyl, hexyl, etc. Additionally, moieties include phenyl groups. When used, the aforementioned complexing agents are preferred added to the organic-based or non-polar coating solution containing the polyfunctional acyl halide in a ratio with the polyfunctional acyl halide monomer of from about 1:5 to 5:1 with 1:1 to 3:1 being preferred. In another preferred embodiment, the concentration of the complexing agent within the coating solutions is from about 0.001 to 2 weight percent.

Once brought into contact with one another, the polyfunctional acyl halide and polyfunctional amine monomers react at their surface interface to form a polyamide layer or film. This layer, often referred to as a polyamide "discriminating layer" or "thin film layer," provides the composite membrane with its principal means for separating solute (e.g. salts) from solvent (e.g. aqueous feed).

The reaction time of the polyfunctional acyl halide and the polyfunctional amine monomer may be less than one second but contact times typically range from about 1 to 60 seconds, after which excess liquid may be optionally removed by way of an air knife, water bath(s), dryer or the like. The removal of the excess solvent can be achieved by drying at elevated temperatures, e.g. from about 40°C to about 120°C, although air drying at ambient temperatures may be used.

The subject method includes the step of applying a polyfunctional amine monomer and polyfunctional acyl halide monomer to a surface of the porous support and interfacially polymerizing the monomers to form a thin film polyamide layer. The subject method is characterized by including at least one of the following steps: i) conducting the interfacial polymerization in the presence of an additional monomer (dissimilar to the aforementioned polyfunctional amine and acyl halide monomer) comprising an aromatic moiety substituted with a single carboxylic acid functional group or salt thereof and a single amine-reactive functional group (expressly including salts and acid precursors thereof), wherein the additional monomer and the polyfunctional acid halide monomer are applied from a common non-polar solution in a molar ratio of from 0.0001:1 to 1:1; and ii) applying such a monomer to the thin film polyamide layer after the interfacial polymerization is substantially complete, wherein the additional monomer is applied from a non-polar solution at a concentration from 0.5 to 5% weight/volume.

The term "amine-reactive" functional group refers to a functional group that is reactive with the amine functional groups of the polyfunctional amine monomer during the interfacial polymerization, i.e. during the time period and conditions present during formation of the thin film polyamide layer. This generally requires substantial reaction within a few seconds of contact at room temperature under standard atmospheric pressure. The amine-reactive functional group is selected from: acyl halide, anhydride, isocyanate and epoxy. In a preferred embodiment, the amine-reactive functional group is an acyl halide and preferably an acyl chloride. When present during the interfacial polymerization, the additional monomer is believed to be incorporated within the resulting polyamide structure (i.e. the additional monomer and polyfunctional amine and acyl halide monomers form a reaction product). When applied after the polyamide is formed, the additional monomer is believed to react with residual amine groups present in the thin film polyamide.

The additional monomer is distinct from the aforementioned polyfunctional acyl halide and polyfunctional amine monomers and comprises an aromatic moiety preferably comprising 14 or less carbon atoms, e.g. benzene, naphthalene, anthracene, phenanthrene, triphenylene, pyrene, anthraquinone, biphenyl, etc. Other representative aromatic ring structures include heteroarenes such as pyridine, pyrazine, furan and thiadiazole. A benzene ring structure is preferred.

In addition to being substituted with a single carboxylic acid functional group (including salts thereof and acid precursors) and a single amine-reactive functional group, the aromatic moiety may be optionally substituted with non amine-reactive functional groups (e.g. "non reactive" during the time period and conditions present during formation of the thin film polyamide layer) such as: halogen, ketone, nitrile, nitro, sulfone, sulfonyl amides, esters including phosphorous esters, and alkyl and alkenyl groups having from 1 to 12 carbon atoms which may be unsubstituted or substituted with moieties such as halogen, ketone, nitrile and ether groups.

A class of preferred monomers is represented by Formula (III). 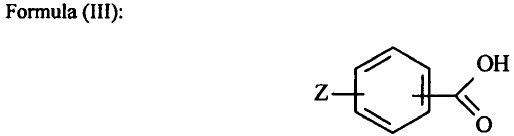 wherein Z is a functional group selected from: acyl halide, anhydride, isocyanate and epoxy, with acyl halide and anhydride being preferred. Z and the carboxylic acid function group are preferably positioned meta or para on the benzene ring. In a preferred embodiment, Z is an acyl chloride with representative examples including 3-carboxybenzoyl chloride and 4-carboxybenzoyl chloride. In another preferred embodiment, Z is an anhydride. Representative species include 4 -carboxy phthalic anhydride and 5-carboxy phthalic anhydride, and salts thereof. A preferred subclass of monomers is represented by Formula (IV).

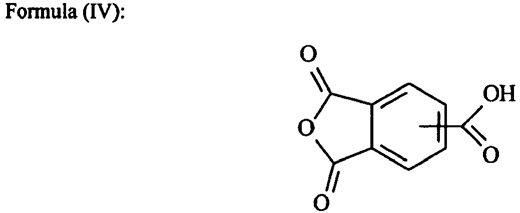

As previously described, the step of applying the polyfunctional monomers to the surface of the porous support preferably involves applying a polar solution comprising the polyfunctional amine monomer and a non-polar solution comprising the polyfunctional acyl halide monomer. The step of applying the solutions preferably involves coating by way of spraying, film coating, rolling, or through the use of a dip tank.

In one embodiment, the additional monomer is added to the non-polar solution prior to the application step, e.g. prior to coating the non-polar solution upon the porous support. In such an embodiment, the non-polar solution preferably comprises at least 0.001 weight/volume of the additional monomer. In another embodiment, the non-polar solution comprises from about 0.001 to 0.1 weight/volume of the additional monomer. The non-polar solution comprises the additional monomer and polyfunctional acyl halide in a molar ratio of from about 0.0001:1 to 1:1, preferably from 0.001:1 to 0.1:1 and more preferably from 0.001:1 to 0.01:1. The non-polar solution may include additional constituents including the complexing agents described above along with small quantities of water (e.g. from 50 to 500 ppm and in some embodiments at least 100 ppm).

In another embodiment, the additional monomer is separately applied to the surface of the porous support (e.g. from a separate solution), either before, during or after the substantial completion of the interfacial polymerization. In this embodiment, the coating solution is a non-polar solution as previously described and comprises a concentration of the additional monomer from about 0.5 to 5 % weight/volume, or preferably from about 1 to 3 % weight /volume. The solution may include additional constituents including the complexing agents described above along with small quantities of water (e.g. from 50 to 500 ppm and in some embodiments at least 100 ppm).

The additional monomer may be formed in-situ within the coating solution, e.g. via a hydrolysis reaction of an acyl halide functional group, or be pre-formed and added to the coating solution.

While not limited to a particular type of polyamide membrane, the subject invention is particularly suited for application to composite membranes such as those commonly used in RO and NF applications, and more particularly to flat sheet composite polyamide membranes used in RO and NF applications. The thin film polyamide layer may optionally include hygroscopic polymers upon at least a portion of its surface. Such polymers include polymeric surfactants, polyacrylic acid, polyvinyl acetate, polyalkylene oxide compounds, poly(oxazoline) compounds, polyacrylamides and related reaction products as generally described in US 6280853; US 7815987; US 2009/0220690 and US 2008/0185332 to Mickols and Niu. In some embodiments, such polymers may be blended and/or reacted and may be coated or otherwise applied to the polyamide membrane from a common solution, or applied sequentially.

Many embodiments of the invention have been described and in some instances certain embodiments, selections, ranges, constituents, or other features have been characterized as being "preferred." Characterizations of "preferred" features should in no way be interpreted as deeming such features as being required, essential or critical to the invention.

### EXAMPLES:

Unless otherwise stated, all sample membranes were produced using a pilot scale membrane manufacturing line. Polysulfone supports were casts from 16.5wt. % solutions in dimethylformamide (DMF) and subsequently soaked in a 3.5 wt. percent meta-phenylene diamine (mPD) aqueous solution. The resulting support was then pulled through a reaction table at constant speed while a thin, uniform layer of a non-polar solution was applied. The non-polar solution included isoparaffinic (ISOPAR L), trimesoyl acyl chloride (TMC) and an additional monomer identified below. Excess non-polar solution was removed and the resulting composite membrane was passed through water rinse tanks and drying ovens. Coupons of the sample membranes were then subjected to standard pressure testing using an aqueous salt solution (2000 ppm NaCl) at 150 psi, pH 8 and at room temperature. Test results are summarized in the tables provided below.

### Example 1: 4-carboxy phthalic anhydride

The non-polar solution used to prepare the sample membranes included 4-carboxy phthalic anhydride as the "additional monomer." The total acyl chloride content of the non-polar solution used to prepare each sample was held constant at 0.24 % w/v. The concentration of the additional monomer varied from 0 to 0.03% w/v between samples while the remaining acyl chloride content was contributed solely by TMC. The non-polar solution also contained tributyl phosphate in a stoichiometric molar ratio with TMC of approximately 1: 1.3. Excess non-polar solution was removed and the resulting composite membranes were passed through water rinse tanks and drying ovens. Test results are summarized below in Table 1.

**Table 1:**

| Sample no. | Monomer Conc. (g/100ml) | Mean (Avg. Flux) (GFD) | Mean(Avg. NaCl passage) | Std Dev (Avg. Flux) | Std Dev (Avg. NaCl passage) |
|---|---|---|---|---|---|
| 1-1 | 0 | 40.6 | 1.07% | 1.44 | 0.05% |
| 2-1 | 0.01 | 40.8 | 0.73% | 1.10 | 0.06% |
| 3-1 | 0.02 | 41.7 | 0.57% | 1.96 | 0.02% |
| 4-1 | 0.03 | 21.4 | 0.96% | 0.63 | 0.09% |

### Example 2: 3-(chlorocarbonyl) benzoic acid

The non-polar solution used to prepare the sample membranes included 3-(chlorocarbonyl) benzoic acid as the "additional monomer." The total acyl chloride content of the non-polar solution used to prepare each sample was held constant at 0.21 % w/v. The concentration of the additional monomer was varied from 0 to 0.04% w/v while the remaining acyl chloride content was contributed solely by TMC. The non-polar solution also contained approximately 0.27% w/v of tri butyl phosphate (TBP).

**Table 2:**

| Sample No. | Monomer Conc. (g/100ml) | Mean (Avg. Flux GFD) | Mean (Avg. NaCl Passage) | Std Dev (Avg. Flux) | Std Dev(Avg. NaCl Passage) |
|---|---|---|---|---|---|
| 1-2 | 0 | 50.5 | 0.54% | 1.87 | 0.03% |
| 2-2 | 0.005 | 49.0 | 0.54% | 2.50 | 0.08% |
| 3-2 | 0.01 | 46.6 | 0.40% | 0.93 | 0.00% |
| 4-2 | 0.02 | 46.7 | 0.38% | 0.79 | 0.01% |
| 5-2 | 0.03 | 48.5 | 0.40% | 0.83 | 0.03% |
| 6-2 | 0.04 | 48.9 | 0.51% | 2.92 | 0.10% |

### Example 3: Comparison

The non-polar solutions used to prepare the sample membranes included TMC, 3-(chlorocarbonyl) benzoic acid as the additional monomer (Sample 3-3) and 1,3-benzenedicarbonyl dichloride as a comparison monomer (Sample 2-3). The total acyl chloride content of the non-polar solutions used to prepare each sample was held constant at 0.2 % w/v. The non-polar solutions also contained approximately of 0.27 % w/v TBP.

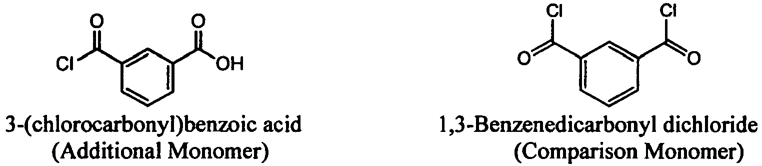

**Table 3:**

| Sample No. | Monomer Concentration (g/100ml) | Mean (Avg. Flux GFD) | Mean (Avg. NaCl Passage) | Std Dev(Avg. Flux) | Std Dev(Avg. NaCl Passage) |
|---|---|---|---|---|---|
| 1-3 | 0 | 41.5 | 0.52% | 1.05 | 0.023% |
| 2-3 (Comp) | 0.03 | 37.1 | 0.62% | 0.34 | 0.028% |
| 3-3 | 0.026 | 36.0 | 0.41% | 1.84 | 0.039% |

### Example 4: Comparison

The non-polar solution used to prepare the sample membranes included 3-(chlorocarbonyl)-5-nitrobenzoic as the additional monomer (Sample 2-4) and 5-nitroisophthaloyl dichloride as a comparison monomer (Sample 1-4). The total acyl chloride content of the non-polar solutions used to prepare each sample was held constant at 0.175 % w/v. The non-polar solution also contained approximately of 0.195 % w/v TBP.

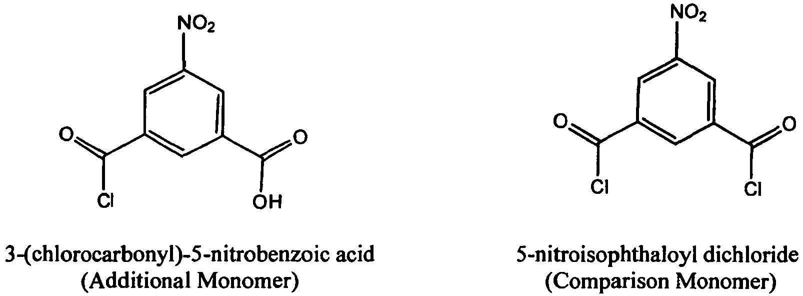

**Table 4:**

| Sample No. | Monomer Concentration (g/100ml) | Mean (Avg. Flux GFD) | Mean (Avg. NaCl Passage) | Std Dev(Avg. Flux) | Std Dev(Avg. NaCl Passage) |
|---|---|---|---|---|---|
| 1-4(Comp) | 0.02 | 36.3 | 0.64% | 0.82 | 0.07% |
| 2-4 | 0.02 | 32.5 | 0.47% | 0.83 | 0.10% |

### Example 5: Comparison

The non-polar solution used to prepare the sample membranes included 3-(chlorocarbonyl)-5-hydroxybenzoic acid as the additional monomer (Sample 2-5) and 5-hydroxyisophthaloyl dichloride as a comparison monomer (Sample 1-5). The total acyl chloride content of the non-polar solutions used to prepare each sample was held constant at 0.175 % w/v. The non-polar solution also contained approximately of 0.195 % w/v TBP

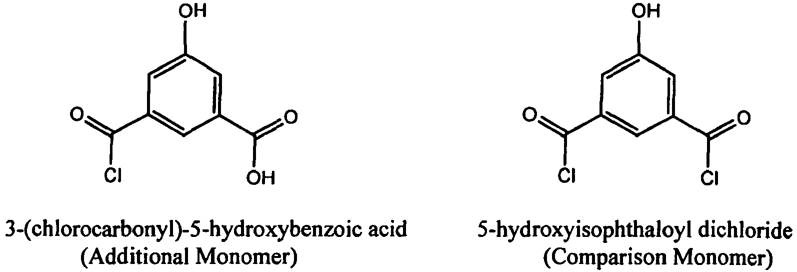

**Table 5:**

| Sample No. | Monomer Concentration (g/100ml) | Mean (Avg. Flux GFD) | Mean (Avg. NaCl Passage) | Std Dev(Avg. Flux) | Std Dev(Avg. NaCl Passage) |
|---|---|---|---|---|---|
| 1-5(Comp) | 0.02 | 34.3 | 0.69% | 1.16 | 0.08% |
| 2-5 | 0.02 | 33.3 | 0.53% | 1.34 | 0.07% |

### Example 6:

The non-polar solution used to prepare the sample membranes included 6-(chlorocarbonyl)-2-naphthoic acid as the additional monomer. The total acyl chloride content of the non-polar solution used to prepare each sample was held constant at 0.24 % w/v. The non-polar solution also contained approximately 0.336% w/v of tri butyl phosphate (TBP).

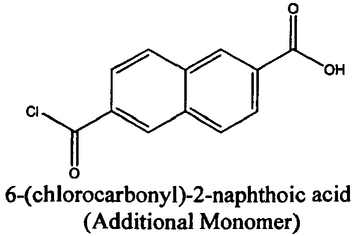

**Table 6:**

| Sample No. | Monomer Concentration (g/100ml) | Mean (Avg. Flux GFD) | Mean (Avg. NaCl Passage) | Std Dev(Avg. Flux) | Std Dev(Avg. NaCl Passage) |
|---|---|---|---|---|---|
| 1-6 | 0 | 41.6 | 0.68% | 1.12 | 0.07% |
| 2-6 | 0.02 | 40.8 | 0.57% | 1.19 | 0.02% |

### Example 7

Hand cast sample composite polyamide membranes were made using an aqueous 3.0 wt. % mPD solution and a non-polar solution including 3-(chlorocarbonyl)benzoic acid as the additional monomer. The TMC content of the non-polar solutions used to prepare each sample was held constant at 0.13 % w/v. No samples included TBP. The concentration of the additional monomer was approximately 0.01% w/v in Sample 1-7 and 0% in the control. The non-polar solution also contained 8 % mesitylene as a co-solvent. The membranes were tested at 225 psi.

**Table 7:**

| Sample No. | Monomer Concentration (g/100ml) | Mean (Avg. Flux GFD) | Mean (Avg. NaCl Passage) | Std Dev(Avg. Flux) | Std Dev(Avg. NaCl Passage) |
|---|---|---|---|---|---|
| Control | 0 | 27.7 | 0.31% | 1.30 | 0.067% |
| 1-7 | 0.01 | 32.1 | 0.42% | - | - |

### Example 8

Sample composite polyamide membranes were prepared using a non-polar solution including 4-carboxy phthalic anhydride as the "additional monomer." The TMC content of the non-polar solutions used to prepare each sample was held constant at 0.13 % w/v. The concentration of the additional monomer was approximately 0.016% w/v in Sample 2-8 and 0% in Sample 1-8. The non-polar solution also contained 9 % mesitylene as a co-solvent. Test results are summarized below in Table 8.

**TABLE 8:**

| Sample no. | Monomer conc. (g/100ml) | Mean (Avg. Flux) (GFD) | Mean (Avg. NaCl passage) | Std Dev (Avg. Flux) | Std Deviation (Avg. NaCl passage) |
|---|---|---|---|---|---|
| 1-8 | 0 | 25.0 | 0.51% | 0.398 | 0.02% |
| 2-8 | 0.016 | 26.3 | 0.48% | 1.417 | 0.02% |

As demonstrated, membranes prepared with the additional monomers exhibited improved performance, (e.g. higher flux, lower salt passage, or both) when compared with similar control and comparison membranes.

## Claims

1. A method for making a composite polyamide membrane comprising a porous support and a thin film polyamide layer, wherein the method comprises the step of applying a polyfunctional amine monomer and polyfunctional acyl halide monomer to a surface of the porous support and interfacially polymerizing the monomers to form a thin film polyamide layer, wherein the method is **characterized by** including at least one of the following steps:
i) conducting the interfacial polymerization in the presence of an additional monomer dissimilar from the aforementioned polyfunctional amine and acid halide monomers and comprising an aromatic moiety substituted with a single carboxylic acid functional group or salt thereof and a single amine-reactive functional group, and wherein the additional monomer and the polyfunctional acid halide monomer are applied from a common non-polar solution in a molar ratio of from 0.0001:1 to 1:1;, and
ii) applying additional monomer dissimilar from the aforementioned polyfunctional amine and acid halide monomers and comprising an aromatic moiety substituted with a single carboxylic acid functional group or salt thereof and a single amine-reactive functional group to the thin film polyamide layer and wherein the additional monomer is applied from a non-polar solution at a concentration from 0.5 to 5% weight/volume;
wherein the amine-reactive functional group is selected from: acyl halide, anhydride, isocyanate and epoxy.

2. The method of claim 1 wherein the amine-reactive functional group is an acyl halide.

3. The method of claim 1 wherein the additional monomer is represented by Formula (III): 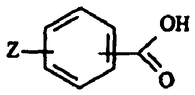 wherein Z is a functional group selected from: acyl halide, anhydride, isocyanate and epoxy.

4. The method of claim 1 wherein the additional monomer is selected from at least one of: 3-carboxybenzoyl chloride and 4-carboxybenzoyl chloride.

5. The method of claim 1 wherein the additional monomer is represented by Formula (IV):

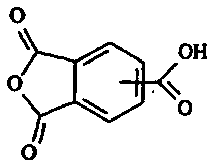

6. The method of claim 1 wherein the additional monomer is selected from at least one of: 4 -carboxy phthalic anhydride and 5-carboxy phthalic anhydride, and salts thereof.

7. The method of claim 1 wherein the step of applying the polyfunctional monomers to the surface of the porous support comprises applying a polar solution comprising the polyfunctional amine monomer and a non-polar solution comprising the polyfunctional acyl halide monomer; and wherein the non-polar solution further comprises the additional monomer.

## Patentansprüche

1. Ein Verfahren zur Herstellung einer Verbundpolyamidmembran, beinhaltend einen porösen Träger und eine Dünnfilmpolyamidschicht, wobei das Verfahren den Schritt des Aufbringens eines polyfunktionellen Aminmonomers und eines polyfunktionellen Acylhalogenidmonomers auf eine Oberfläche des porösen Trägers und das Grenzflächenpolymerisieren der Monomere, um eine Dünnfilmpolyamidschicht zu bilden, beinhaltet, wobei das Verfahren durch das Einschließen von mindestens einem der folgenden Schritte gekennzeichnet ist:
i) Durchführen der Grenzflächenpolymerisation in Gegenwart eines zusätzlichen Monomers, das sich von den oben erwähnten polyfunktionellen Amin- und Säurehalogenidmonomeren unterscheidet und einen aromatischen Anteil, substituiert mit einer einzelnen funktionellen Carbonsäuregruppe oder einem Salz davon und einer einzelnen aminreaktiven funktionellen Gruppe, beinhaltet, und wobei das zusätzliche Monomer und das polyfunktionelle Säurehalogenidmonomer aus einer gemeinsamen nichtpolaren Lösung in einem Molverhältnis von 0,0001 : 1 bis 1 : 1 aufgebracht werden; und
ii) Aufbringen eines zusätzlichen Monomers, das sich von den oben erwähnten polyfunktionellen Amin- und Säurehalogenidmonomeren unterscheidet und einen aromatischen Anteil, substituiert mit einer einzelnen funktionellen Carbonsäuregruppe oder einem Salz davon und einer einzelnen aminreaktiven funktionellen Gruppe, beinhaltet, auf die Dünnfilmpolyamidschicht, und wobei das zusätzliche Monomer aus einer nichtpolaren Lösung in einer Konzentration von 0,5 bis 5 % (Gewicht/Volumen) aufgetragen wird;
wobei die aminreaktive funktionelle Gruppe ausgewählt ist aus: Acylhalogenid, Anhydrid, Isocyanat und Epoxy.

2. Verfahren gemäß Anspruch 1, wobei die aminreaktive funktionelle Gruppe ein Acylhalogenid ist.

3. Verfahren gemäß Anspruch 1, wobei das zusätzliche Monomer durch die folgende Formel (III) dargestellt wird: 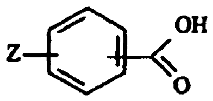 wobei Z eine funktionelle Gruppe ist, die ausgewählt ist aus: Acylhalogenid, Anhydrid, Isocyanat und Epoxy.

4. Verfahren gemäß Anspruch 1, wobei das zusätzliche Monomer aus mindestens einem von Folgenden ausgewählt ist: 3-Carboxybenzoylchlorid und 4-Carboxybenzoylchlorid.

5. Verfahren gemäß Anspruch 1, wobei das zusätzliche Monomer durch die folgende Formel (IV) dargestellt wird:

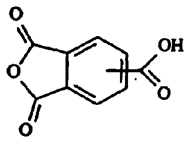

6. Verfahren gemäß Anspruch 1, wobei das zusätzliche Monomer aus mindestens einem von Folgenden ausgewählt ist: 4-Carboxyphthalsäureanhydrid und 5-Carboxyphthalsäureanhydrid und Salzen davon.

7. Verfahren gemäß Anspruch 1, wobei der Schritt des Aufbringens der polyfunktionellen Monomere auf die Oberfläche des porösen Trägers das Aufbringen einer polaren Lösung, beinhaltend das polyfunktionelle Aminmonomer und eine nichtpolare Lösung, beinhaltend das polyfunktionelle Acylhalogenidmonomer, beinhaltet; und wobei die nichtpolare Lösung ferner das zusätzliche Monomer beinhaltet.

## Revendications

1. Une méthode pour réaliser une membrane en polyamide composite comprenant un support poreux et une couche de polyamide en film mince, où la méthode comprend l'étape consistant à appliquer un monomère amine polyfonctionnel et un monomère halogénure d'acyle polyfonctionnel sur une surface du support poreux et à polymériser de façon interfaciale les monomères afin de former une couche de polyamide en film mince, la méthode étant **caractérisée par** le fait d'inclure au moins l'une des étapes suivantes :
i) effectuer la polymérisation interfaciale en présence d'un monomère additionnel dissemblable des monomères amine et halogénure d'acide polyfonctionnels susmentionnés et comprenant une partie aromatique substituée par un groupe fonctionnel acide carboxylique unique ou un sel de celui-ci et un groupe fonctionnel réactif à l'amine unique, et où le monomère additionnel et le monomère halogénure d'acide polyfonctionnel sont appliqués à partir d'une solution non polaire commune dans un rapport molaire allant de 0,0001/1 à 1/1 ; et
ii) appliquer le monomère additionnel dissemblable des monomères amine et halogénure d'acide polyfonctionnels susmentionnés et comprenant une partie aromatique substituée par un groupe fonctionnel acide carboxylique unique ou un sel de celui-ci et un groupe fonctionnel réactif à l'amine unique sur la couche de polyamide en film mince et où le monomère additionnel est appliqué à partir d'une solution non polaire à une concentration allant de 0,5 à 5 % poids/volume ;
où le groupe fonctionnel réactif à l'amine est sélectionné parmi : un halogénure d'acyle, un anhydride, un isocyanate et un époxy.

2. La méthode de la revendication 1 où le groupe fonctionnel réactif à l'amine est un halogénure d'acyle.

3. La méthode de la revendication 1 où le monomère additionnel est représenté par la Formule (III) : 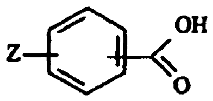 où Z est un groupe fonctionnel sélectionné parmi : un halogénure d'acyle, un anhydride, un isocyanate et un époxy.

4. La méthode de la revendication 1 où le monomère additionnel est sélectionné parmi au moins : soit le chlorure de 3-carboxybenzoyle, soit le chlorure de 4-carboxybenzoyle.

5. La méthode de la revendication 1 où le monomère additionnel est représenté par la Formule (IV) :

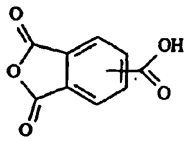

6. La méthode de la revendication 1 où le monomère additionnel est sélectionné parmi au moins : soit l'anhydride 4-carboxy phtalique, soit l'anhydride 5-carboxy phtalique, et des sels de ceux-ci.

7. La méthode de la revendication 1 où l'étape consistant à appliquer les monomères polyfonctionnels sur la surface du support poreux comprend le fait d'appliquer une solution polaire comprenant le monomère amine polyfonctionnel et une solution non polaire comprenant le monomère halogénure d'acyle polyfonctionnel ; et où la solution non polaire comprend en sus le monomère additionnel.
